# EUROPEAN PATENT SPECIFICATION

(11) **EP 1 666 333 B1**
(45) Date of publication and mention of the grant of the patent: **11.11.2009**
(21) Application number: 04773501.4
(22) Date of filing: 24.09.2004
(51) Int. Cl.: B62D 1/18, B62D 5/04

(54) **ELECTRIC POWER STEERING DEVICE**
ELEKTRISCHE SERVOLENKVORRICHTUNG
DISPOSITIF DE COMMANDE DE DIRECTION A ENERGIE ELECTRIQUE

(30) Priority: 25.09.2003 JP 2003333840
(43) Date of publication of application: 07.06.2006
(73) Proprietor: NSK Ltd., Shinagawa-ku, Tokyo 141-8560 (JP); NSK Steering Systems Co. Ltd, Shinagawa-ku, Tokyo 141-8560 (JP)
(72) Inventor: SANJI, Hiroaki, NSK Steering Systems Co., Ltd., Maebashi-shi, Gunma 371-8528 (JP); IGARASHI, Masaharu, NSK Steering Systems Co., Ltd, Maebashi-shi, Gunma 371-8528 (JP); TSUNODA, Tomoyuki, NSK Steering Systems Co., Ltd, Maebashi-shi, Gunma 371-8528 (JP)
(74) Representative: Grünecker, Kinkeldey, Stockmair & Schwanhäusser Anwaltssozietät
(86) International application number: PCT/JP2004/014413
(87) International publication number: WO 2005/030557

(56) References cited:
- EP-A1- 0 444 996
- DE-A1- 10 033 810
- DE-C- 875 615
- DE-U1- 20 217 630
- FR-A1- 2 702 725
- GB-A- 2 343 157
- JP-A- 6 211 137
- JP-A- 2000 127 991
- JP-A- 2002 002 502
- JP-A- 2002 059 852
- US-A- 5 819 592

## Description

### <Technical Field>

The present invention relates to an electric power steering system which is designed to increase convenience in mounting a steering column by making the oscillation of the steering column moderate.

Each of the documents DE 100 33 810 A1 and GB 2 343 157 A discloses a steering column which comprises an steering assist unit with the features of the preamble of independent claims 1 and 5.

### <Background Art>

In recent years, power steering systems are incorporated in steering systems of vehicles in order to alleviate the steering effort made by the driver when he or she steers the vehicle. A main stream of those power steering systems currently used is an electric power steering system in which a steering assist force is imparted by an electric motor which receives power supply from a battery. In the electric power steering system, a column assist method is used preferably in which an electric assist unit is incorporated in the steering column, whereby driving power of an electric motor is transmitted to an output shaft at a speed which is reduced appropriately so as to provide a necessary assist force for steering.

While the use of the electric power steering brings many advantages in steering the vehicle, the electric power steering system of the column assist type never fails to increase the weight due to the electric assist unit, and for example, when mounting such a steering column on a vehicle, a worker is forced to undertake difficult work due to the oscillation of the steering column without moderation when compared to a steering column having an electric assist unit installed thereon.

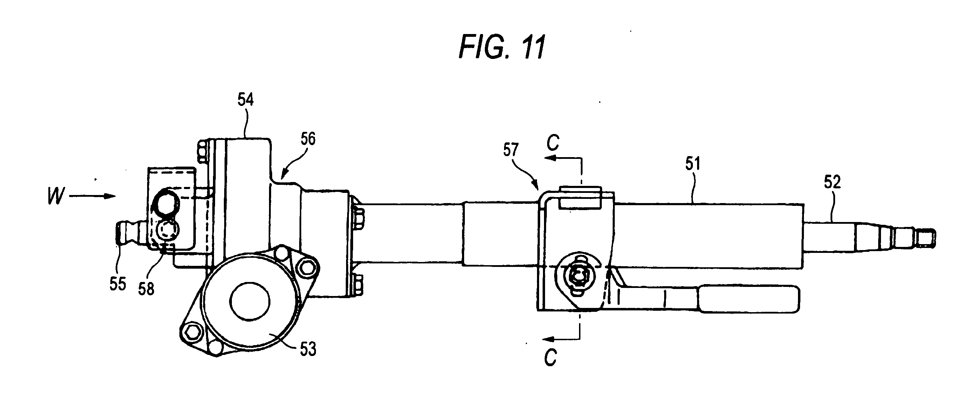

An example of the column assist type electric power steering system is shown in Fig. 11. This steering system is configured such that a steering column is made to oscillate vertically by means of a tilt pivot of a tilt mechanism. The steering column 51 has a steering upper shaft 52 which is rotatably provided in an interior of the steering column 51. The steering column 51 includes at a lower portion thereof an electric assist unit 56 which is made up of an electric motor 53, a gear housing 54 and an output shaft 55. For example, when the driver turns a steering wheel, not shown, a steering effort imparted thereby is transmitted from the steering upper shaft 52 to the electric assist unit 56, and the steering effort is then enhanced by an assist force by the electric motor 53, the enhanced effort being transmitted to the output shaft 55.

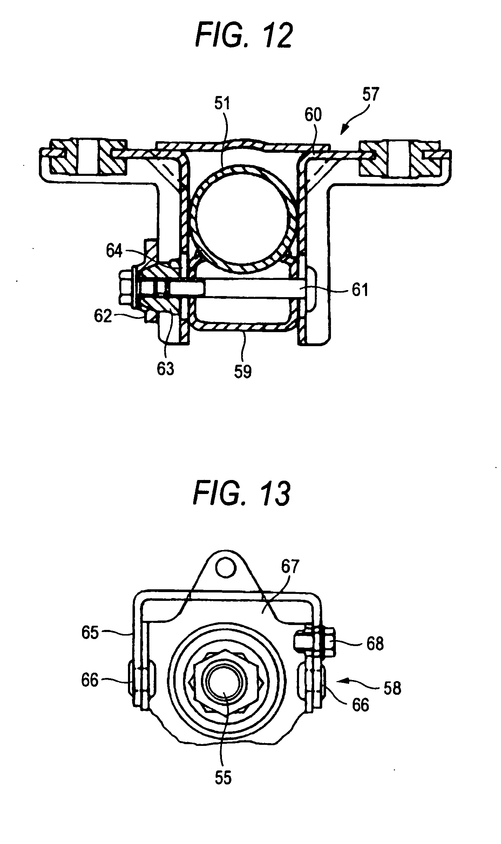

On the other hand, the tilt mechanism which includes a tilt clamp 57 and a tilt pivot 58 is provided on the steering column 51 in order to allow the driver to take a desirable driving position for him or her. As shown in Fig. 12, the tilt clamp 57 is configured such that a distance bracket 59 fixed to the steering column 51 is held by an upper bracket 60 which is mounted on a vehicle body and a rod member 61 which is passed through both the brackets 59, 60 is tightened by means of a lever 62 and a nut 63 which is taper fitted in the lever 62. Normally, vertical elongate holes 64 are formed in the upper bracket 60 which match in length a tilt stroke of the steering column 51. The smooth oscillation of the steering column 51 is enabled by a vertical movement of the rod member within the elongate holes 64.

In addition, as shown in Fig. 13, the tilt pivot 58 is configured such that a yoke member 67 extending from the gear housing 54 is brought into engagement with two pin members 66 which are mounted on a lower bracket 65 which is mounted on the vehicle body. By using the device like this, when performing a tilt operation, the steering column 51 can be made to oscillate about the pin members 66 as a center of oscillation.

There is proposed an electric power steering system in which in order to make the oscillation of a steering column 51 moderate, in particular, in order to restrict the spring up of the steering column 51 due to an upward bending moment when the steering column 51 is dislodged from a vehicle body mounting portion due to a high load being applied from a steering wheel side, a plate member is installed at a position near an upper limit of a tilt stroke in such a manner as to oppositely face an upper surface of the steering column 51 so as to prevent an excessive rotation of the steering column (refer to, for example, JP-A-2000-127991 (page 4, Fig. 2)).

### <Disclosure of the Invention>

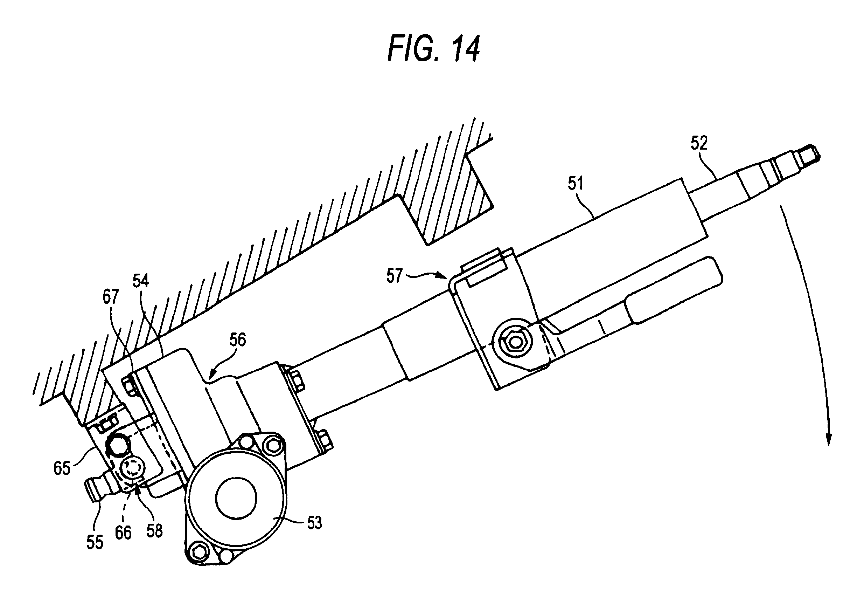

With the column assist type electric power steering system, in installing the steering column on the vehicle, due to the electric assist unit 56 having a large mass, as shown in Fig 14, the steering column 51 tends to easily rotate about the pin members 66, and some means has to be used to prevent the rotation. For example, as shown in Fig. 13, it is a currently adopted practice that a rotation preventing screw 68 is temporarily mounted on the steering column 51 in such a manner as to penetrate the lower bracket 65, so as to prevent the rotation of the steering column 51 during assembly, and the screw 68 is removed from the steering column 51 when the installation has been completed. However, the method using the rotation preventing means lacks convenience due to a certain length of time being necessary to mount and remove the screw 68.

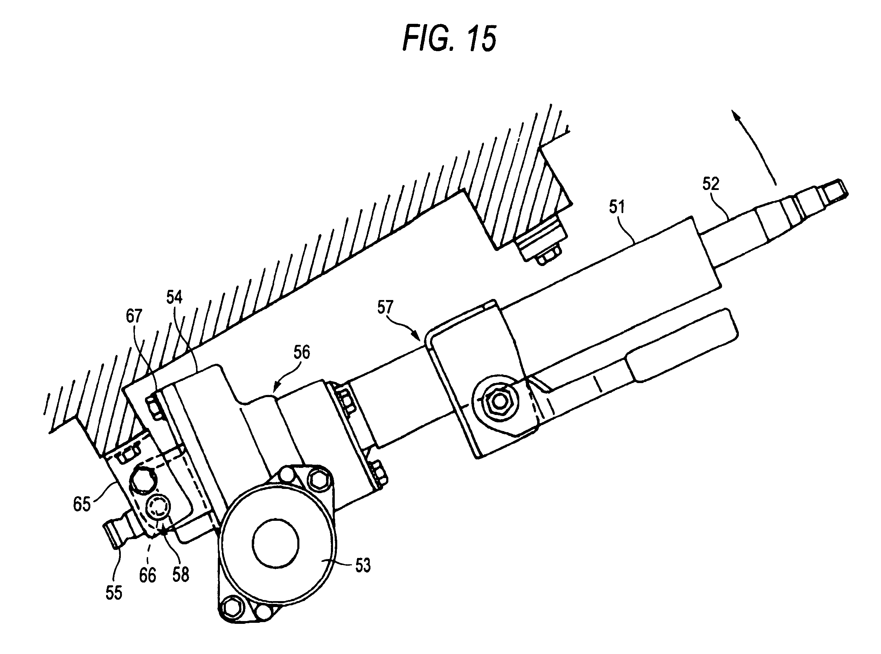

On the other hand, with an energy absorbing steering column, when a high load is exerted thereon from a steering wheel side, since an upper bracket 60 is dislodged from a vehicle body, a steering column 51 is restrained by a tilt pivot 58 only. In this event, as shown in Fig. 15, the steering column 51 is sprung upwards due to an upward bending moment, and for example, there may be caused a possibility that it will be difficult to maintain an optimum inflation and deployment of an airbag.

An object of the invention is to provide an electric power steering system which enhances convenience in mounting a steering column on a vehicle body by making the oscillation of the steering column moderate and restricts a free movement of the steering column in the event that the steering column is dislodged.

The invention provides an electric power steering system including an upper bracket fixed to a vehicle body, a steering column disposed between a pair of tightening plate portions of the upper bracket, a steering shaft provided rotatably within the steering column, a tilt mechanism including a tilt clamp which tightly fastens the steering column between the tightening plate portions of the upper bracket and a tilt pivot which oscillates the steering column, an electric assist unit lying at a lower end of the steering column to transmit an assist force of an electric motor to an output shaft and a lower bracket fixed to the vehicle body at an opposite side of the electric assist unit to the steering column to rotatably support a pivot shaft of the tile pivot, wherein a housing of the electric assist unit is brought into engagement with the pivot shaft of the tilt pivot via a connecting member in such a manner as to be allowed to move loosely, so that the steering column is allowed to oscillate about the pivot shaft, and wherein a column rotation restricting portion is provided between the lower bracket and the housing.

In addition, the invention provides an electric power steering system including an upper bracket fixed to a vehicle body, a steering column disposed between a pair of tightening plate portions of the upper bracket, a steering shaft provided rotatably within the steering column, a tilt mechanism including a tilt clamp which tightly fastens the steering column between the tightening plate portions of the upper bracket and a tilt pivot which oscillates the steering column, an electric assist unit lying at a lower end of the steering column to transmit an assist force of an electric motor to an output shaft and a lower bracket fixed to the vehicle body at an opposite side of the electric assist unit to the steering column to rotatably support a pivot shaft of the tile pivot, wherein a housing of the electric assist unit is brought into engagement with the pivot shaft of the tilt pivot in such a manner as to be allowed to move loosely, so that the steering column is allowed to oscillate about the pivot shaft, and wherein a column rotation restricting portion is provided between the lower bracket and the housing.

Furthermore, the invention provides an electric power steering system including an upper bracket fixed to a vehicle body, a steering column disposed between a pair of tightening plate portions of the upper bracket, a steering shaft provided rotatably within the steering column, a tilt mechanism including a tilt clamp which tightly fastens the steering column between the tightening plate portions and a tilt pivot which oscillates the steering column, an electric assist unit lying at a lower end of the steering column to transmit an assist force of an electric motor to an output shaft, a bracket fixed to a housing at a steering column side of the electric assist unit so as to rotatably support a pivot shaft of the tilt pivot, and a lower bracket fixed to the vehicle body at an opposite side of the electric assist unit to the steering column, wherein the steering column is brought into engagement with the pivot shaft of the tilt pivot via a connecting member in such a manner as to be allowed to move loosely, so that the steering column is allowed to oscillate about the pivot shaft, and wherein a column rotation restricting portion is provided between the bracket and an inner column of the steering column.

In the invention, to restrict the oscillation of the steering column, a reference angle is determined which is slightly larger than an angle which satisfies a tilt stroke. The column rotation restricting portion such as a stopper projection which resists the rotation is disposed in order to forcibly stop the oscillation of the steering column when the rotating angle of the tilt pivot reaches an angle corresponding to the reference angle. In the event that the column rotation restricting portion is disposed, since the tile pivot does not reach a rotating angle which corresponds to the reference angle in a tilt adjustment operation, the oscillation of the steering column is not interrupted at all, whereby the steering column can be inclined smoothly to a desired angle. On the contrary, when the tilt pivot reaches the rotating angle, since the stopper projection comes into contact with a mating surface, the steering column cannot rotate any further, and hence the oscillation is stopped, whereby the oscillation of the steering column can be made so moderate that the oscillation of the steering column is suppressed effectively.

Consequently, in the installation of the steering column on to a vehicle, the downward rotation of the steering column can be stopped without using the rotation preventing means such as the screw which is temporarily assembled or a stopper, whereby convenience is enhanced, thereby making it possible to enhance remarkably the assembling efficiency. In addition, also in the event that the steering column is dislodged from the vehicle body mounting portion when a high load is applied thereto, the spring up or falling of the steering column can be prevented, thereby contributing to an appropriate operation of an occupant protection system or the like.

### <Brief Description of the Drawings>

Fig. 1 is a side view which shows an embodiment of an electric power steering system according to the invention;
Fig. 2 is a sectional view showing a tilt clamp of the invention, which is taken along the line A-A in Fig. 1;
Figs. 3(a), (b) are diagrams which show in detail a column rotation restricting portion shown in Fig. 1, in which Fig. 3(a) is a side view of the column rotation restricting portion, and Fig. 3 (b) is a partially omitted sectional view taken along the line B-B in Fig. 3(a);
Fig. 4 is an operation explanatory diagram which shows how a steering column attempting to rotate downwards is stopped by the column rotation restricting portion according to the invention when the steering column is installed on a vehicle;
Fig. 5 is an operation explanatory diagram which shows how the steering column attempting to spring upwards is stopped by the column rotation restricting portion according to the invention;
Fig. 6 is an operation explanatory diagram which shows how the steering column attempting to fall downwards is stopped by the column rotation restricting portion according to the invention;
Fig. 7 is a side view which shows another embodiment of an electric power steering system according to the invention;
Figs. 8(a), (b) are diagrams which show in detail a column rotation restricting portion shown in Fig. 7, in which Fig. 8 (a) is a side view of the column rotation restricting portion, and Fig. 8(b) is a view resulting when seen from a direction indicated by an arrow X in Fig. 8 (a) ;
Fig. 9 is a side view which shows a further embodiment of an electric power steering system according to the invention;
Figs. 10(a), (b) are diagrams which show in detail a column rotation restricting portion shown in Fig. 9, in which Fig. 10(a) is a view resulting when seen in a direction indicated by an arrow Y in Fig. 9, and Fig. 10(b) is a view resulting when seen in a direction indicated by an arrow Z in Fig. 9;
Fig. 11 is a side view which shows an example of a conventional electric power steering system;
Fig. 12 is a sectional view showing a conventional tilt clamp, which is taken along the line C-C in Fig. 11;
Fig. 13 is a view showing a conventional tilt pivot, which is seen in a direction indicated by an arrow W in Fig. 11;
Fig. 14 is an operation explanatory diagram which shows how a steering column attempting to rotate downwards is stopped when a lower bracket is fixed to a vehicle body by a conventional technique in installing the steering column on a vehicle;
Fig. 15 is an operation explanatory diagram which shows how the steering column springs upwards in the conventional technique when the steering column is dislodged from the vehicle body;
Fig. 16 is a side view which shows an embodiment of an electric power steering system according to the invention; and
Fig. 17 is a side view which shows another embodiment of an electric power steering according to the invention.

### <Best Mode for Carrying out the Invention>

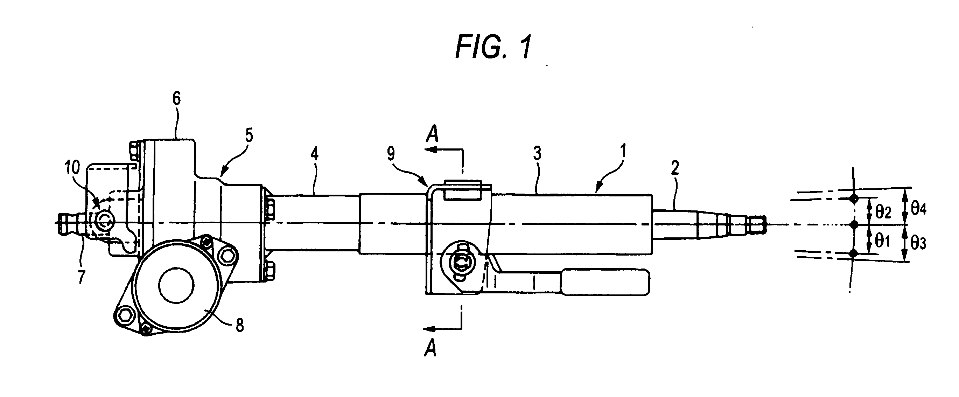

An embodiment of the invention will be described with reference to the drawings. In Fig. 1, an electric power steering system according to the invention has a steering column 1 and a steering upper shaft 2 which is provided rotatably in an interior of the steering column 1. Although omitting an illustration thereof, as part of the energy absorbing steering column, the steering upper shaft 2 is divided into an outer shaft and an inner shaft, and both the shafts are slidably connected to each other by way of such a means as serrations. In addition, the steering column 1 is divided into an outer column 3 and an inner column 4, and both the columns are slidably connected to each other.

The electric power steering system includes an electric assist unit 5 which is provided continuously to the inner column 4 of the steering column 1. This electric assist unit 5 has a worm wheel which rotates together with an output shaft 7 which is disposed within a gear housing 6, and this worm wheel is brought into mesh engagement with a worm which is connected to a spindle of an electric motor 8. Due to this, the worm wheel rotates in conjunction with the rotation of the worm at a speed which is appropriately reduced, whereby an assist force by the electric motor 8 is designed to be transmitted to the output shaft 7. Note that a steering wheel, not shown, is mounted on the steering upper shaft 2. In addition, the output shaft 7 is connected to a steering system via an intermediate shaft, not shown.

In addition, the electric power steering system includes a tilt mechanism which includes a tilt clamp 9 which tightly fastens the steering column 1 to an upper bracket and a tilt pivot 10 which oscillates the steering column.

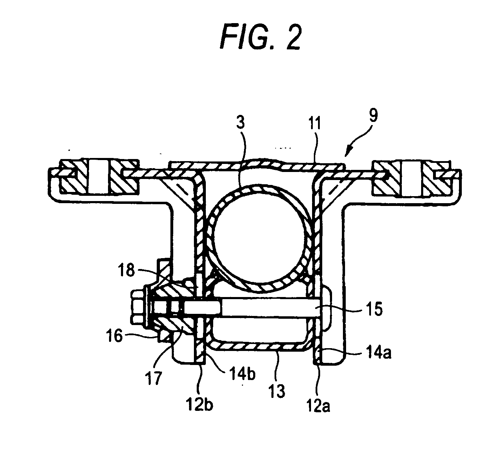

As shown in Fig. 2, in the tilt clamp 9, a pair of vertical plate portions 14a, 14b of a distance bracket 13 which is connected to the outer column 3 of the steering column 1 are held by a pair of tightening plate portion 12a, 12b of an upper bracket 11, and a rod member 15 which is provided in such a manner as to be passed through the tightening plate portions 12a, 12b and the vertical plate portions 14a, 14b is tightened up by a lever 16 and a nut 17 which is taper fitted in the lever 16 so that the vertical plate portions 14a, 14b are fixed between the tightening plate portions 12a, 12b.

Vertical elongate holes 18, through which the rod member 15 is passed, are formed, respectively, in the tightening plate portions 12a, 12b of the upper bracket 11. Assuming that the steering column 1 can oscillate about the tilt pivot from a neutral position vertically through an angle θ1 and an angle θ2, respectively, during a tilt adjustment operation (refer to Fig. 1), the vertical elongate holes 18 each have a length that does not interrupt the movement of the rod member 15 when the rod member moves therein.

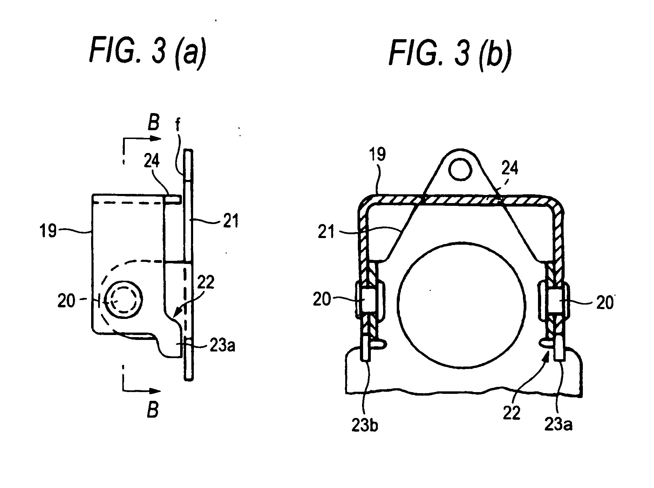

On the other hand, the tilt pivot 10 is configured such that a yoke which extends from the gear housing 6 is brought into engagement with two pin members 20 which are mounted on a lower bracket 19 (refer to Fig. 3(b)) having an inverted U shape cross section which is mounted on the vehicle body. By this configuration, when the tilt clamp 9 is in an unclamped state, the steering column 1 can be oscillated about the pin members.

In addition, in the embodiment, a column rotation restricting portion 22, adapted to restrict the rotation of the steering column 1, is provided between the lower bracket 19 and the gear housing 6.

This column rotation restricting portion 22 is, as shown in Figs. 3(a), (b), made up of a pair of primary stopper projections 23a, 23b which is formed below the pin members 20 of the tilt pivot 10 on the lower bracket 19 in such a manner as to oppositely face the yoke member 21 and a secondary stopper projection 24 which is formed above the pin members 20 of the tilt pivot 10 in such a manner as to oppositely face the yoke member 21. The primary stopper projections 23a, 23b projects obliquely downwardly from a lower end of the bracket and distal ends of the projections confront a front surface *f* of the yoke member 21 with a certain gap provided therebetween. The secondary stopper projection 24 projects perpendicularly from an upper end of the bracket, and a distal end of the projection confronts the front surface *f* of the yoke member 21.

While a rotating angle of the tile pivot 10 is such as not only to satisfy a tilt stroke but also to allow for the rotation to a rotating angle equal to or lager than the tilt stroke satisfying angle, an upper limit and a lower limit are determined for this rotating angle. When the steering column 1 can oscillate from a neutral position downwardly to an angle θ1 and upwardly to an angle θ2 (refer to Fig. 1), the lower limit and the upper limit of the rotating angle are determined based on angles θ3, θ4 as reference which result when certain extra angles are added to the angles θ1, θ2, respectively. Consequently, the gap is maintained between the distal ends of the primary stopper projections 23a, 23b and the front surface *f* of the yoke member 21 while the tilt pivot 10 oscillates downwardly until a rotating angle corresponding to the reference angle θ3 is reached. On the other hand, the gap between the distal end of the secondary stopper projection 24 and the front surface *f* of the yoke member 21 is maintained while the tilt pivot 10 oscillates upwardly until a rotating angle corresponding to the reference angle θ4 is reached.

When the tilt pivot 10 reaches rotating angles equal to or larger than the angles corresponding to the reference angles, the gaps between the two members are gone, and as this occurs, the steering column 1 oscillating downwards is restrained by virtue of the contact of the primary stopper projections 23a, 23b with the yoke member 21. On the contrary, the steering column 1 oscillating upwards is restrained by virtue of the contact of the secondary stopper projection 24 with the yoke member 24.

In the electric power steering system like this, when a tilt adjustment operation is carried out, the steering column 1 can be inclined smoothly from the neutral position to the predetermined angles (θ1, θ2) by holding the gaps between the primary stopper projections 23a, 23b and the front surface *f* of the yoke member 21 and the gap between the secondary stopper projection 24 and the front surface *f* of the yoke member 21.

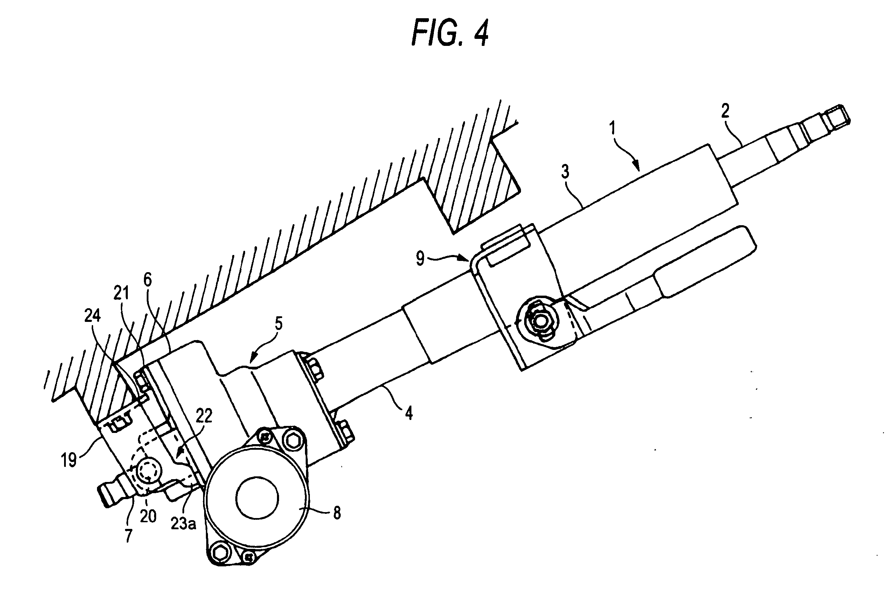

On the other hand, when the steering column is installed on a vehicle, the steering column 1 attempts to rotate downward about the pin members 20. When the rotating angle increases, the yoke member 21 is, as shown in Fig. 4, brought into contact with the primary stopper projections 23a, 23b, and the steering column 1 cannot rotate further, whereby the downward oscillation is stopped.

Thus, the oscillation of the steering column 1 can be made so moderate that the oscillation of the steering column is suppressed effectively, whereby, for example, the steering column can be mounted conveniently on a vehicle body without a means such as a stopper which resists the rotation of the steering column 1.

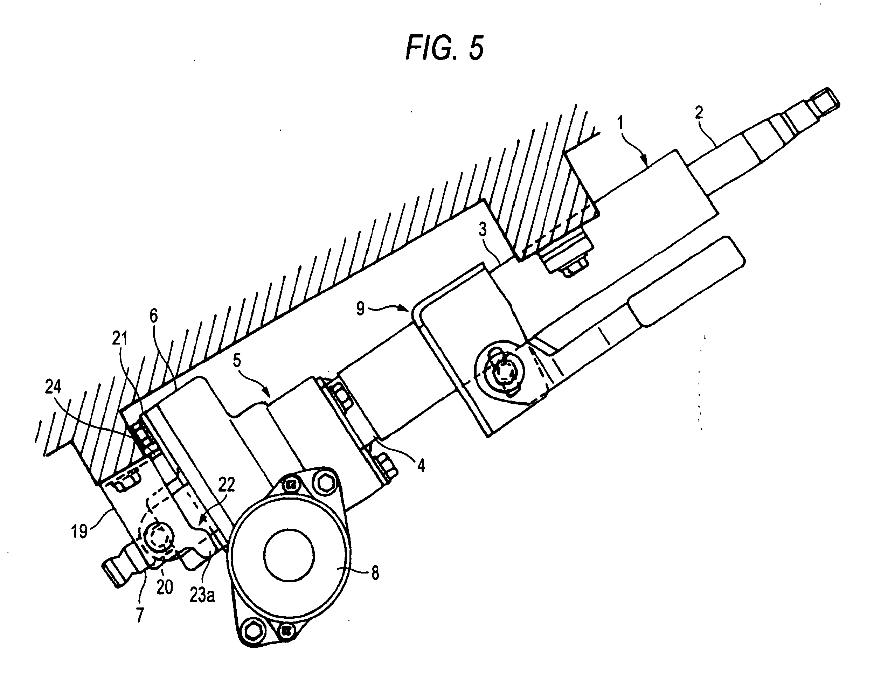

On the other hand, when the steering column 1 is dislodged from the vehicle body mounting portion due to a high load being applied thereto from a steering wheel side, the steering column 1, which is now restrained by only the tilt pivot 10, attempts to spring upwards due to a upward bending moment. When the rotating angle increases, the yoke member 21 is brought into contact with the secondary stopper projection 24, as shown in Fig. 5, and the steering column 1 cannot rotate further, whereby the steering column 1 is stopped from springing upwards.

Thus, by making the upward oscillation of the steering column 1 moderate, a free upward movement thereof can be restricted. Consequently, the spring up of the steering column 1 can be prevented by the extremely simple device, i.e., the secondary stopper projection 24, which is added to the existing element, without using a mechanism for preventing the steering column from springing upwards.

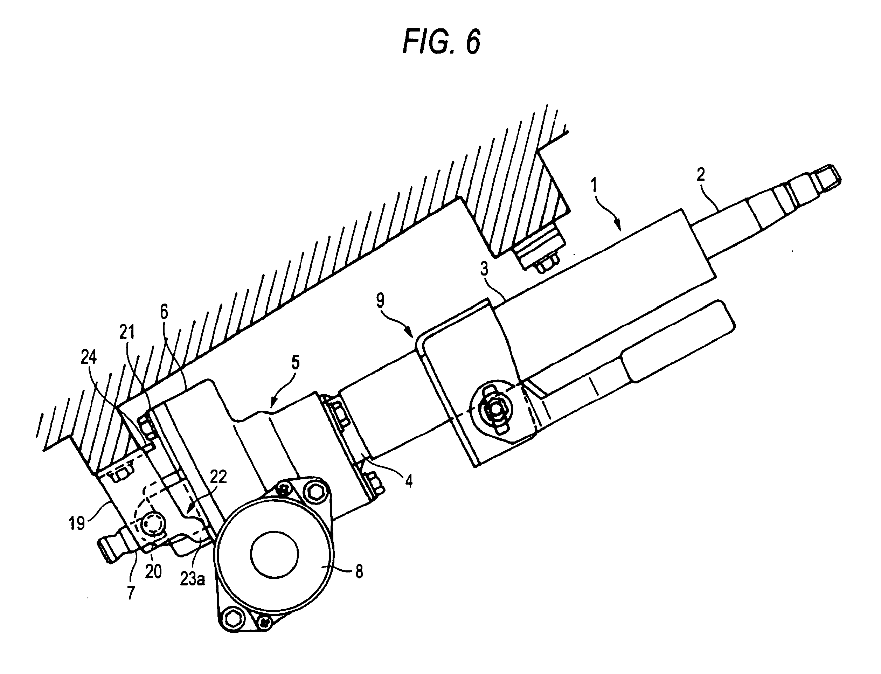

In addition, when the steering column 1 is dislodged from the vehicle body mounting portion due to a high load being applied thereto from the steering wheel side, the steering column 1, which is now restrained by only the tilt pivot 10, attempts to fall downwards. When the rotating angle increases, the yoke member 21 is brought into contact with the primary stopper projections 23a, 23b, as shown in Fig. 6, and the steering column 1 cannot rotate further, whereby the steering column 1 is stopped from falling downwards.

Thus, by making the downward oscillation of the steering column 1 moderate, a free downward movement thereof can be restricted. Consequently, the falling down of the steering column 1 can be prevented by the extremely simple devices, i.e., the primary stopper projections 23a, 23b, which are added to the existing element, without using a mechanism for preventing the steering column 1 from falling downwards.

With the embodiment, in the installation of the steering column 1 on to the vehicle, the downward rotation of the steering column can be stopped without using the rotation preventing means such as the screw which is temporarily assembled or a stopper, whereby convenience is enhanced, thereby making it possible to enhance remarkably the assembling efficiency.

In addition, also in the event that the steering column is dislodged from the vehicle body mounting portion when a high load is applied thereto, the spring up or falling of the steering column 1 can be prevented, thereby contributing to an appropriate operation of an occupant protection system or the like.

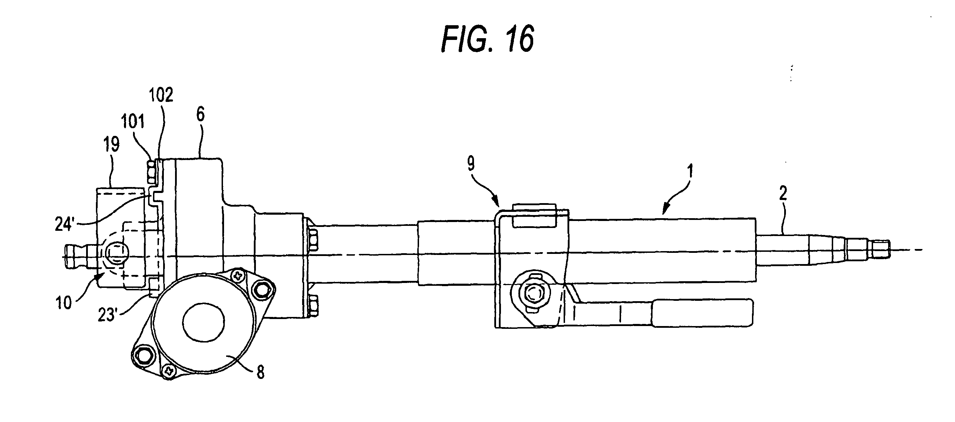

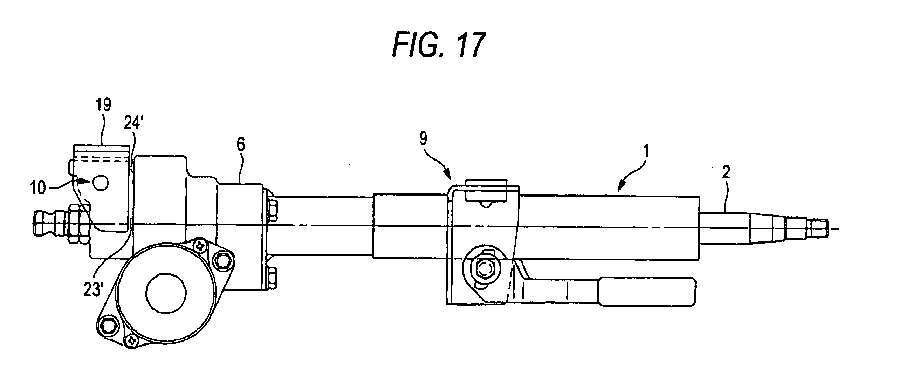

In addition, in this embodiment, as shown in Fig. 16, a primary stopper projection 23' and a secondary stopper projection 24' may be provided on a surface of the gear housing 6 which oppositely faces the lower bracket 19 in such a manner as to be spaced apart from each other vertically, whereby the vertical movement of the steering column 1 about the tilt pivot 10 can be restricted by causing the primary stopper projection 23' and the secondary stopper projection 24' to be brought into abutment with the lower bracket 19. This brings the same advantage as that provided by the configuration shown in Figs. 1 to 6. Note that while the primary stopper projection 23' and the secondary stopper projection 24' may, as shown in Fig. 16, be provided as part of a mounting member 102 which is fixed to the surface of the gear housing 6 which oppositely faces the lower bracket 19 with bolts, the primary stopper projection 23' and the secondary stopper projection 24' may be projections which are provided direct on the gear housing 6, as shown in Fig. 17.

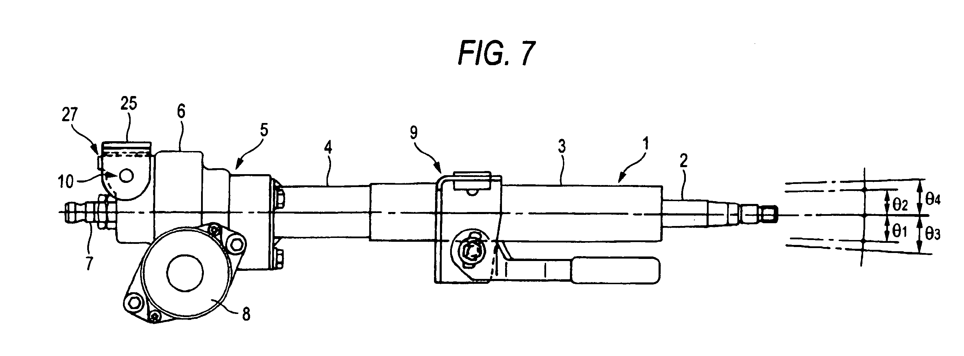

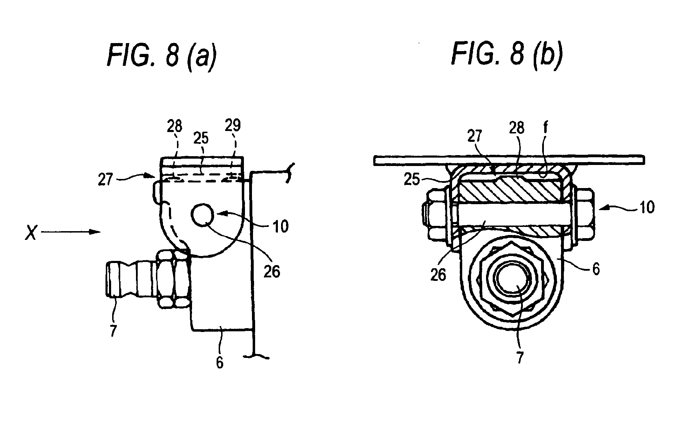

Another embodiment of the invention, which differs from the embodiment that has been described above, will be described. In Fig. 7, a tilt pivot 10 of this embodiment is such that a lower end portion of a gear housing 6 is brought into direct engagement with a shaft member 26 (refer to Figs. 8(a), (b)) which is mounted on a lower bracket 25 having an inverted U shape cross section which is mounted on the vehicle body. By the configuration like this, when a tilt clamp 9 is in an unclamped state, a steering column 1 can be made to oscillate about the shaft member 26.

In addition, in this embodiment, a column rotation restricting portion 27 which restrict rotation of the steering column 1 is provided between the lower bracket 25 and the gear housing 6.

This column rotation restricting member 27 includes, as shown in Fig. 8(a), a primary stopper projection 28 and a secondary stopper projection 29 which are formed on both sides of the shaft member 26 in such a manner as to oppositely face each other. The primary stopper projection 28 and the secondary stopper projection 29 both project perpendicularly from the gear housing 6, as shown in Fig. 8(b), and distal ends of the projections confront a lower surface *f* of the lower bracket 25 with certain gaps held therebetween.

A rotating angle of the tile pivot 10 is such as not only to satisfy a tilt stroke but also to allow for the rotation to a rotating angle equal to or lager than the tilt stroke satisfying angle, and an upper limit and a lower limit are determined for this rotating angle. When the steering column 1 can oscillate from a neutral position downwardly to an angle θ1 and upwardly to an angle θ2 (refer to Fig. 7), the lower limit and the upper limit of the rotating angle are determined based on angles θ3, θ4 as reference which result when certain extra angles are added to the angles θ1, θ2, respectively. Consequently, the gap is maintained between the distal end of the primary stopper projection 28 and the lower surface *f* of the lower bracket 25 while the tilt pivot 10 oscillates downwardly until a rotating angle corresponding to the reference angle θ3 is reached. On the other hand, the gap between the distal end of the secondary stopper projection 29 and the lower surface *f* of the lower bracket 25 is maintained while the tilt pivot 10 oscillates upwardly until a rotating angle corresponding to the reference angle θ4 is reached.

When the tilt pivot 10 reaches rotating angles equal to or larger than the angles corresponding to the reference angles, the gap between the two confronting members is gone, and as this occurs, the steering column 1 oscillating downwards is restrained by virtue of the contact of the primary stopper projection 28 with the lower bracket 25. On the contrary, the steering column 1 oscillating upwards is restrained by virtue of the contact of the secondary stopper projection 29 with the lower bracket 25.

In this embodiment, when the steering column is installed on a vehicle, the steering column 1 attempts to rotate downward about the shaft member 26. When the rotating angle increases, since the primary stopper projection 28 is brought into contact with the lower bracket 25, the steering column 1 cannot rotate further, whereby the downward oscillation is stopped.

Thus, the oscillation of the steering column 1 can be made moderate, whereby, for example, the steering column can be mounted conveniently on a vehicle body without a means such as a screw which resists the rotation of the steering column 1 or a stopper.

In addition, when the steering column 1 is dislodged from the vehicle body mounting portion due to a high load being applied thereto from a steering wheel side, the steering column 1, which is now restrained by only the tilt pivot 10, attempts to spring upwards due to a upward bending moment. When the rotating angle increases, the secondary stopper projection 29 is brought into contact with the lower bracket 25 and the steering column 1 cannot rotate further, whereby the steering column 1 is stopped from springing upwards.

Thus, by making the upward oscillation of the steering column 1 moderate, a free upward movement thereof can be restricted. Consequently, the spring up of the steering column 1 can be prevented by the extremely simple device, i.e., the secondary stopper projection 28, which is added to the existing element, without using a mechanism for preventing the steering column from springing upwards.

In addition, when the steering column 1 is dislodged from the vehicle body mounting portion due to a high load being applied thereto from the steering wheel side, the steering column 1, which is now restrained by only the tilt pivot 10, attempts to fall downwards. When the rotating angle increases, since the primary stopper projection 28 is brought into contact with the lower bracket 25, the steering column 1 cannot rotate further, whereby the steering column 1 is stopped from falling downwards.

Thus, by making the downward oscillation of the steering column 1 moderate, a free downward movement thereof can be restricted. Consequently, the falling down of the steering column 1 can be prevented by the extremely simple device, i.e., the primary stopper projection 28, which is added to the existing element, without using a mechanism for preventing the steering column from falling downwards.

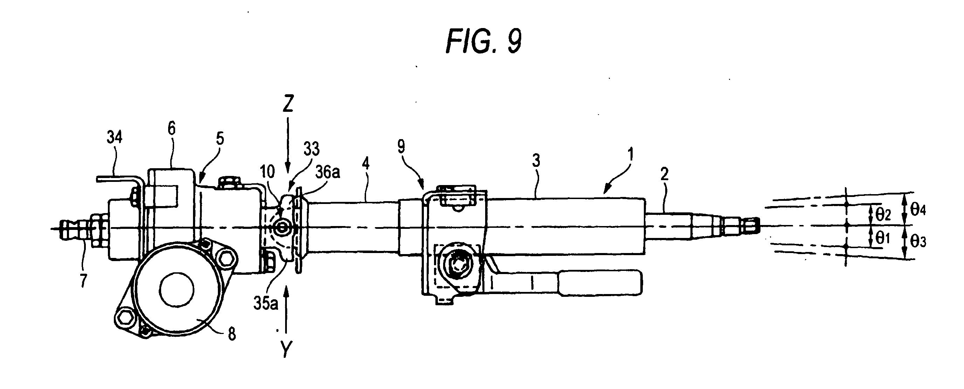

A further embodiment of the invention, which differs from the embodiments that have been described above, will be described. In Fig. 9, a tilt pivot 10 of this embodiment is disposed coaxially with an axis of a steering column 1 between a gear housing 6 and an inner column of the steering column. The tilt pivot 10 is such that a yoke member 32 extending from a lower end of the inner column 4 is brought into engagement with two pin members 31 provided on stopper projections (which will be described later on) of a bracket 30 which is mounted on the gear housing 6. By the configuration like this, when a tilt clamp 9 is in an unclamped state, the steering column 1 can be made to oscillate about the pin members 31. In this embodiment, a column rotation restricting portion 33 for restricting oscillation of the steering column 1 is provided between the bracket 30 and the inner column 4. Note that reference numeral 34 in the figure denotes a lower bracket.

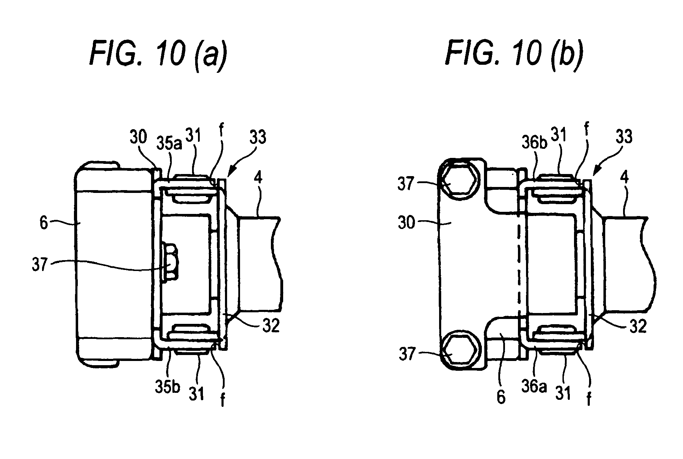

This column rotation restricting portion 33 is made up of a pair of stopper projections 35a, 35b which are, as shown in Fig. 10(a), formed below the pin members 31 of the tilt pivot 10 on the bracket 30 in such a manner as not only to oppositely face the yoke member 32 but also to keep a certain gap therebetween and a pair of stopper projections 36a, 36b which are, as shown in Fig. 10 (b), formed above the pin members 31 of the tilt pivot 10 on the bracket 30 in such a manner as not only to oppositely face the yoke member 32 but also to keep a certain gap therebetween. These stopper projections 35a, 35a both project from a surface of the bracket 30 in parallel with the axis of the steering column, and distal ends of the projections confront a front surface *f* of the yoke member 32 with a certain gap held therebetween. The stopper projections 36a, 36b also project from the surface of the bracket 30 in parallel with the axis of the steering column, and distal ends of the projections 36a, 36b confront a front surface *f* of the yoke member 32 with a certain gap held therebetween.

In this embodiment, an upper limit and a lower limit are determined for a rotating angle of the tilt pivot 10. When the steering column 1 can oscillate from a neutral position downwardly to an angle θ1 and upwardly to an angle θ2 (refer to Fig. 9), the lower limit and the upper limit of the rotating angle are determined based on angles θ3, θ4 as reference which result when certain extra angles are added to the angles θ1, θ2, respectively. Consequently, the gaps are maintained between the distal ends of the primary stopper projections 35a, 35b and the front surface *f* of the yoke member 32 while the tilt pivot 10 oscillates downwardly until a rotating angle corresponding to the reference angle θ3 is reached. On the other hand, the gaps are maintained between the distal ends of the secondary stopper projections 36a, 36b and the front surface *f* of the yoke member 32 while the tilt pivot 10 oscillates upwardly until a rotating angle corresponding to the reference angle θ4 is reached.

When the tilt pivot 10 reaches rotating angles equal to or larger than the angles corresponding to the reference angles, the gap between the two confronting members are gone, and as this occurs, the steering column 1 oscillating downwards is restrained by virtue of the contact of the primary stopper projections 35a, 35b with the yoke member 32. On the contrary, the steering column 1 oscillating upwards is restrained by virtue of the contact of the secondary stopper projections 36a, 36b with the yoke member 32.

Note that as shown in Figs. 10 (a), (b), the bracket 30 is fixed to the gear housing 6 with three bolts 37.

In this embodiment, when installing the steering column on a vehicle, the steering column 1 attempts to rotate downwards about the pin members 31. When the rotating angle increases, since the yoke member 32 is brought into contact with the primary stopper projections 35a, 35b, the steering column 1 cannot rotate further, whereby the downward oscillation thereof is stopped.

Thus, the oscillation of the steering column 1 can be made moderate, and the steering column 1 can be mounted on the vehicle body conveniently without having to use a means such as a stopper which resists the rotation of the steering column 1.

In addition, when the steering column 1 is dislodged from the vehicle body mounting portion due to a high load being applied thereto from a steering wheel side, the steering column 1, which is now restrained by only the tilt pivot 10, attempts to spring upwards due to a upward bending moment. When the rotating angle increases, since the yoke member 32 is brought into contact with the secondary stopper projections 36a, 36b, the steering column 1 cannot rotate further, whereby the steering column 1 is stopped from springing upwards.

In addition, when the steering column 1 is dislodged from the vehicle body mounting portion due to a high load being applied thereto from the steering wheel side, the steering column 1, which is now restrained by only the tilt pivot 10, attempts to fall downwards. When the rotating angle increases, since the yoke member 32 is brought into contact with the primary stopper projections 35a, 35b, the steering column 1 cannot rotate further, whereby the steering column 1 is stopped from falling downwards.

Thus, by making the upward or downward oscillation of the steering column 1 moderate, a free upward or downward movement thereof can be restricted. Consequently, the spring up or falling down of the steering column 1 can be prevented by the extremely simple devices, i.e., the secondary stopper projections 36a, 36b or the primary stopper projections 35a, 35b, which are added to the existing element.

Thus, as has been described heretofore, according to the invention, in the installation of the steering column on to a vehicle, the downward rotation of the steering column can be stopped without using the rotation preventing means such as the screw which is temporarily assembled or a stopper, whereby convenience is enhanced, thereby making it possible to enhance remarkably the assembling efficiency.

In addition, also in the event that the steering column is dislodged from the vehicle body mounting portion when a high load is applied thereto, the spring up or falling of the steering column can be prevented, thereby contributing to an appropriate operation of an occupant protection system or the like.

Thus, while the specific embodiments of the invention have been described in detail, it is obvious to those skilled in the art that various alterations and modifications can be added without departing from the scope of the invention.

This patent application is such as to be based on the Japanese Patent Application (No. 2003-333840) filed on September 25, 2003.

### <Industrial Application>

The invention can preferably be used as an electric power steering system which is incorporated in a steering system of a vehicle so as to alleviate the steering effort made by the driver when he or she steers the vehicle by imparting a steering assist force by an electric motor which is fed by a battery.

## Claims

1. An electric power steering system comprising:
an upper bracket fixed to a vehicle body;
a steering column (1) disposed between a pair of tightening plate portions (12a, 12b) of the upper bracket;
a steering shaft (2) provided rotatably within the steering column(1);
a tilt mechanism comprising a tilt pivot (10) which oscillates the steering column (1) from a neutral position downwardly to an angle Θ1 and upwardly to an angle Θ2;
an electric assist unit (5) disposed at a lower end of the steering column (1) to transmit an assist force of an electric motor (8) to an output shaft; and
a lower bracket (19) fixed to the vehicle body at an opposite side of the electric assist unit (5) to the steering column (1) to rotatably support a pivot shaft of the tilt pivot (10), wherein
a housing (6) of the electric assist unit (5) is brought into engagement with the pivot shaft (20) of the tilt pivot (10) in such a manner as to be allowed to move loosely, so that the steering column (1) is allowed to oscillate about the pivot shaft (10),
**characterized in that**,
said system further comprises:
a column rotation restricting portion (22) provided between the lower bracket (19) and the housing (6) to restrict lower and upper limit of a rotating angle of the steering column Θ3, Θ4;
wherein said tilt mechanism further comprises a tilt clamp (9) which tightly fastens the steering column (1) between the tightening plate portions (12a, 12b) of the upper bracket.

2. The electric power steering system as set forth in Claim 1, wherein the column rotation restricting portion comprises a primary stopper projection and a secondary stopper projection
which are formed on the housing at both sides of the pivot shaft of the tilt pivot in such a manner as to oppositely face the lower bracket and also to maintain determined gaps between the lower bracket and themselves, respectively.

3. The electric power steering system according to claim 1, **characterized in that** said system further comprises a connecting member (21), wherein said housing (6) of the electric assist unit (5) is brought into engagement with the pivot shaft (20) of the tilt pivot via said connecting member in such a manner as to be allowed to move loosely, so that the steering column (1) is allowed to oscillate about the pivot shaft (20).

4. The electric power steering system as set forth in Claim 3, wherein the column rotation restricting portion comprises:
a pair of primary stopper projections (23a, 23b) which is formed below the pivot shaft (20) of the tilt pivot (10) on the lower bracket in such a manner as to oppositely face the connecting member (21) with a determined gap held between the connecting member (21) and themselves; and
a secondary stopper projection (24) which is formed above the pivot shaft (20) of the tilt pivot (10) in such a manner as to oppositely face the connecting member (21) with a determined gap held between the secondary stopper projection (24) and itself.

5. An electric power steering system comprising:
an upper bracket fixed to a vehicle body;
a steering column (1) disposed between a pair of tightening plate portions of the upper bracket;
a steering shaft (2) provided rotatably within the steering column;
a tilt mechanism comprising a tilt pivot (10) which oscillates the steering column (1) from a neutral position downwardly to an angle Θ 1 and upwardly to an angle Θ 2;
an electric assist unit (5) disposed at a lower end of the steering column (1) to transmit an assist force of an electric motor to an output shaft;
wherein the steering column (1) is brought into engagement with the pivot shaft of the tilt pivot (10) via a connecting member (32) in such a manner as to be allowed to move loosely, so that the steering column is allowed to oscillate about the pivot shaft,
**characterized in that**,
said system further comprises:
a bracket (30) fixed to a gear housing (6) at a steering column side of the electric assist unit (5) so as to rotatably support a pivot shaft of the tilt pivot;
a lower bracket (34) fixed to the vehicle body at an opposite side of the electric assist unit to the steering column (1), and
a column rotation restricting portion is provided between the bracket (30) and an inner column of the steering column (1) to restrict lower and upper limit of a rotating angle of the steering column Θ3, Θ4;
wherein the column rotation restricting portion comprises:
a pair of primary stopper projections (35a, 35b) which is formed below the pivot shaft (31) of the tilt pivot (10) on the bracket (30) in such a manner as to oppositely face the connecting member (32) with a determined gap held between the connecting member (32) and themselves, and
a pair of secondary stopper projections (36a, 36b) which is formed above the pivot shaft (31) of the tilt pivot (10) in such a manner as to oppositely face the connecting member (32) with a determined gap held between the connecting member (32) and themselves,
wherein said tilt mechanism further comprises:
a tilt clamp (9) which tightly fastens the steering column (1) between the tightening plate portions.

## Patentansprüche

1. Elektrisches Servolenksystem, das umfasst:
eine obere Halterung, die an einer Fahrzeugkarosserie befestigt ist;
eine Lenksäule (1), die zwischen einem Paar Spannplattenabschnitten (12a, 12b) der oberen Halterung angeordnet ist;
eine Lenkwelle (2), die drehbar im Inneren der Lenksäule (1) vorhanden ist;
einen Neigungsmechanismus, der ein Neigungsgelenk (10) umfasst, mit dem die Lenksäule (1) aus einer neutralen Position nach unten an einen Winkel θ1 und nach oben an einen Winkel θ2 geschwenkt wird;
eine elektrische Hilfseinheit (5), die an einem unteren Ende der Lenksäule (1) angeordnet ist, um eine Hilfskraft eines Elektromotors (8) auf eine Ausgangswelle zu übertragen; und
eine untere Halterung (19), die an der Fahrzeugkarosserie an einer der Lenksäule (1) gegenüberliegenden Seite der elektrischen Hilfseinheit (5) befestigt ist, um eine Gelenkwelle des Neigungsgelenks (10) drehbar zu tragen, wobei
ein Gehäuse (6) der elektrischen Hilfseinheit (5) mit der Gelenkwelle (20) des Neigungsgelenks (10) so in Eingriff gebracht wird, dass lose Bewegung möglich ist und
die Lenksäule (1) um die Gelenkwelle (10) herum geschwenkt werden kann,
**dadurch gekennzeichnet, dass**
das System des Weiteren umfasst:
einen Abschnitt (22) zum Einschränken von Säulendrehung, der zwischen der unteren Halterung (19) und dem Gehäuse (6) vorhanden ist, um eine untere und eine obere Grenze eines Drehwinkels der Lenksäule θ3, θ4 zu bilden;
wobei der Neigungsmechanismus des Weiteren eine Neigungsschelle (9) umfasst, die die Lenksäule (1) fest zwischen den Spannplattenabschnitten (12a, 12b) der oberen Halterung einspannt.

2. Elektrisches Servolenksystem nach Anspruch 1, wobei der Abschnitt zum Einschränken von Säulendrehung einen primären Anschlagabschnitt sowie einen sekundären Anschlagabschnitt umfasst, die an dem Gehäuse an beiden Seiten der Gelenkwelle des Neigungsgelenks so ausgebildet sind, dass sie der unteren Halterung gegenüberliegend zugewandt sind, und die darüber hinaus jeweils vorgegebene Zwischenräume zwischen der unteren Halterung und ihnen aufweisen.

3. Elektrisches Servolenksystem nach Anspruch 1, **dadurch gekennzeichnet, dass** das System des Weiteren ein Verbindungselement (21) umfasst, wobei das Gehäuse (6) der elektrischen Hilfseinheit (5) über das Verbindungselement so in Eingriff mit der Gelenkwelle (20) des Neigungsgelenks gebracht wird, dass lose Bewegung möglich ist, so dass die Lenksäule (1) um die Gelenkwelle (20) herum geschwenkt werden kann.

4. Elektrisches Servolenksystem nach Anspruch 3, wobei der Abschnitt zum Einschränken von Säulendrehung umfasst:
paarige primäre Anschlagabschnitte (23a, 23b), die unterhalb der Gelenkwelle (20) des Neigungsgelenks (10) an der unteren Halterung so ausgebildet sind, dass sie dem Verbindungselement (21) gegenüberliegend zugewandt sind, wobei ein bestimmter Zwischenraum zwischen dem Verbindungselement (21) und ihnen besteht; und
einen sekundären Anschlagabschnitt (24), der oberhalb der Gelenkwelle (20) des Neigungsgelenks (10) so ausgebildet ist, dass er dem Verbindungselement (21) gegenüberliegend zugewandt ist, wobei ein bestimmter Zwischenraum zwischen dem sekundären Anschlagabschnitt (24) und ihm besteht.

5. Elektrisches Servolenksystem, das umfasst:
eine obere Halterung, die an einer Fahrzeugkarosserie befestigt ist;
eine Lenksäule (1), die zwischen einem Paar Spannplattenabschnitten (12a, 12b) der oberen Halterung angeordnet ist;
eine Lenkwelle (2), die drehbar im Inneren der Lenksäule (1) vorhanden ist;
einen Neigungsmechanismus, der ein Neigungsgelenk (10) umfasst, mit dem die Lenksäule (1) aus einer neutralen Position nach unten an einen Winkel θ1 und nach oben an einen Winkel θ2 geschwenkt wird;
eine elektrische Hilfseinheit (5), die an einem unteren Ende der Lenksäule (1) angeordnet ist, um eine Hilfskraft eines Elektromotors (8) auf eine Ausgangswelle zu übertragen;
wobei die Lenksäule (1) über ein Verbindungselement (32) so mit der Gelenkwelle des Neigungsgelenks (10) so in Eingriff gebracht wird, dass lose Bewegung möglich ist, und die Lenksäule um die Gelenkwelle herum geschwenkt werden kann,
**dadurch gekennzeichnet, dass**
das System des Weiteren umfasst:
eine Halterung (30), die an einem Getriebegehäuse (6) an einer Lenksäulenseite der elektrischen Hilfseinheit (5) so befestigt ist, dass sie eine Gelenkwelle des Neigungsgelenks drehbar trägt;
eine untere Halterung (34), die an der Fahrzeugkarosserie an einer der Lenksäule (1) gegenüberliegenden Seite der elektrischen Hilfseinheit befestigt ist, und
wobei ein Abschnitt zum Einschränken von Säulendrehung zwischen der Halterung und einer inneren Säule der Lenksäule (1) vorhanden ist, um eine untere und eine obere Grenze eines Drehwinkels der Lenksäule θ3, θ4 zu bilden;
wobei der Abschnitt zum Einschränken von Säulenbewegung umfasst:
paarige primäre Anschlagabschnitte (35a, 35b), die unterhalb der Gelenkwelle (31) des Neigungsgelenks (10) an der unteren Halterung (30) so ausgebildet sind, dass sie dem Verbindungselement (32) gegenüberliegend zugewandt sind, wobei ein bestimmter Zwischenraum zwischen dem Verbindungselement (32) und ihnen besteht; und
paarige sekundäre Anschlagabschnitte (36a, 36b), die oberhalb der Gelenkwelle (31) des Neigungsgelenks (10) so ausgebildet sind, dass sie dem Verbindungselement (32) gegenüberliegend zugewandt sind, wobei ein bestimmter Zwischenraum zwischen dem Verbindungselement (32) und ihnen besteht,
wobei der Neigungsmechanismus des Weiteren umfasst:
eine Neigungsschelle (9), die die Lenksäule (1) fest zwischen den Spannplattenabschnitten einspannt.

## Revendications

1. Système de direction assistée électrique comportant :
un support supérieur fixé sur une carrosserie de véhicule ; une colonne de direction (1) disposée entre une paire de parties de plaque de serrage (12a, 12b) du support supérieur ;
un arbre de direction (2) prévu de façon rotative dans la colonne de direction (1) ;
un mécanisme d'inclinaison comportant un pivot d'inclinaison (10) qui fait osciller la colonne de direction (1) depuis une position neutre vers le bas jusqu'à un angle θ1 et vers le haut jusqu'à un angle θ2 ;
une unité d'assistance électrique (5) disposée au niveau d'une extrémité inférieure de la colonne de direction (1) afin de transmettre une force d'assistance d'un moteur électrique (8) à un arbre de sortie ; et
un support inférieur (19) fixé sur la carrosserie de véhicule au niveau d'un côté opposé à l'unité d'assistance électrique (5) par rapport à la colonne de direction (1) afin de supporter de façon rotative un arbre de pivotement du pivot d'inclinaison (10),
un boîtier (6) de l'unité d'assistance électrique (5) étant amené en engagement avec l'arbre de pivotement (20) du pivot d'inclinaison (10) de manière à pouvoir se déplacer librement, de telle sorte que la colonne de direction (1) peut osciller autour de l'arbre de pivotement (10),
**caractérisé en ce que**,
ledit système comporte en outre :
une partie de limitation de rotation de colonne (22) prévue entre le support inférieur (19) et le boîtier (6) afin de restreindre une limite inférieure et supérieure d'un angle de rotation de la colonne de direction θ3, θ4 ;
ledit mécanisme d'inclinaison comportant en outre une bride d'inclinaison (9) qui fixe fermement la colonne de direction (1) entre les parties de plaque de serrage (12a, 12b) du support supérieur.

2. Système de direction assistée électrique selon la revendication 1, dans lequel la partie de limitation de rotation de colonne comporte une saillie de butée principale et une saillie de butée secondaire qui sont formées sur le boîtier sur les deux côtés de l'arbre de pivotement du pivot d'inclinaison de façon à faire face de manière opposée au support inférieur et à maintenir également des espaces déterminés entre le support inférieur et elles-mêmes, respectivement.

3. Système de direction assistée électrique selon la revendication 1, **caractérisé en ce que** ledit système comporte en outre un élément de raccordement (21), ledit boîtier (6) de l'unité d'assistance électrique (5) étant amené en engagement avec l'arbre de pivotement (20) du pivot d'inclinaison par l'intermédiaire dudit élément de raccordement de manière à pouvoir se déplacer librement, de telle sorte que la colonne de direction (1) peut osciller autour de l'arbre de pivotement (20).

4. Système de direction assistée électrique selon la revendication 3, dans lequel la partie de limitation de rotation de colonne comporte :
une paire de saillies de butée principale (23a, 23b) qui est formé sous l'arbre de pivotement (20) du pivot d'inclinaison (10) sur le support inférieur de façon à faire face de manière opposée à l'élément de raccordement (21) avec un espace déterminé maintenu entre l'élément de raccordement (21) et elles-mêmes ; et
une saillie de butée secondaire (24) qui est formée au-dessus de l'arbre de pivotement (20) du pivot d'inclinaison (10) de façon à faire face d'une manière opposée à l'élément de raccordement (21) avec un espace déterminé maintenu entre la saillie de butée secondaire (24) et lui-même.

5. Système de direction assistée électrique comportant :
un support supérieur fixé sur une carrosserie de véhicule ; une colonne de direction (1) disposée entre une paire de parties de plaque de serrage du support supérieur ;
un arbre de direction (2) prévu de façon rotative dans la colonne de direction ;
un mécanisme d'inclinaison comportant un pivot d'inclinaison (10) qui fait osciller la colonne de direction (1) depuis une position neutre vers le bas jusqu'à un angle θ1 et vers le haut jusqu'à un angle θ2 ;
une unité d'assistance électrique (5) disposée au niveau d'une extrémité inférieure de la colonne de direction (1) afin de transmettre une force d'assistance d'un moteur électrique à un arbre de sortie ;
la colonne de direction (1) étant amenée en engagement avec l'arbre de pivotement du pivot d'inclinaison (10) par l'intermédiaire d'un élément de raccordement (32) de façon à pouvoir se déplacer librement, de telle sorte que la colonne de direction peut osciller autour de l'arbre de pivotement, **caractérisé en ce que**,
ledit système comporte en outre :
un support (30) fixé sur un boîtier d'engrenage (6) sur un côté de colonne de direction de l'unité d'assistance électrique (5) afin de supporter de façon rotative un arbre de pivotement du pivot d'inclinaison ;
un support inférieur (34) fixé sur la carrosserie de véhicule sur un côté opposé de l'unité d'assistance électrique par rapport à la colonne de direction (1), et
une partie de limitation de rotation de colonne qui est prévue entre le support (30) et une colonne intérieure de la colonne de direction (1) afin de restreindre une limite inférieure et supérieure d'un angle de rotation de la colonne de direction θ3, θ4 ;
la partie de limitation de rotation de colonne comportant :
une paire de saillies de butée principale (35a, 35b) qui est formée sous l'arbre de pivotement (31) du pivot d'inclinaison (10) sur le support (30) de façon à faire face de manière opposée à l'élément de raccordement (32) avec un espace déterminé maintenu entre l'élément de raccordement (32) et elles-mêmes, et
une paire de saillies de butée secondaire (36a, 36b) qui est formé au-dessus de l'arbre de pivotement (31) du pivot d'inclinaison (10) de façon à faire face de manière opposée à l'élément de raccordement (32) avec un espace déterminé maintenu entre l'élément de raccordement (32) et elles-mêmes,
ledit mécanisme d'inclinaison comportant en outre :
une bride d'inclinaison (9) qui fixe fermement la colonne de direction (1) entre les parties de plaque de serrage.
